# EUROPEAN PATENT SPECIFICATION

(11) **EP 4 145 896 B1**
(45) Date of publication and mention of the grant of the patent: **02.12.2026**
(21) Application number: 21796221.6
(22) Date of filing: 25.04.2021
(51) Int. Cl.: H04W 24/10, H04W 64/00

(54) **TRANSMISSION METHOD AND DEVICE FOR APERIODIC POSITIONING REPORT**
ÜBERTRAGUNGSVERFAHREN UND -VORRICHTUNG FÜR APERIODISCHEN POSITIONIERUNGSBERICHT
PROCÉDÉ ET DISPOSITIF DE TRANSMISSION POUR RAPPORT DE POSITIONNEMENT APÉRIODIQUE

(30) Priority: 30.04.2020 CN 202010367125
(43) Date of publication of application: 08.03.2023
(73) Proprietor: Vivo Mobile Communication Co., Ltd., Dongguan, Guangdong 523863 (CN)
(72) Inventor: SI, Ye, Dongguan, Guangdong 523863 (CN); WU, Huaming, Dongguan, Guangdong 523863 (CN); WANG, Yuanyuan, Dongguan, Guangdong 523863 (CN)
(74) Representative: Petraz, Gilberto Luigi
(86) International application number: PCT/CN2021/089624
(87) International publication number: WO 2021/218857

(56) References cited:
- WO-A1-2018/218393
- WO-A1-2020/065894
- CN-A- 1 852 561
- CN-A- 102 006 547
- CN-A- 110 719 148
- US-A1- 2018 270 818
- US-A1- 2020 033 849
- US-A1- 2022 026 517
- US-B2- 10 349 371

## Description

### TECHNICAL FIELD

This application belongs to the field of communication technologies, and in particular, relates to a method and device for transmitting an aperiodic positioning report.

### BACKGROUND

With the development of the communication technology, in order to meet the requirement, the 5th generation mobile communication technology (5th Generation, 5G) system needs to implement a lower delay for the reporting of positioning information.

However, a current positioning report is reported periodically, which has a high delay and cannot meet the requirement.

In US 2022/0026517A1, a base station includes a reception processing unit that receives a signal for use in positioning transmitted from a terminal device, and a positioning processing unit that computes the location of the terminal device using the signal for use in positioning.

In US 2020/0033849A1, logic may signal capability and interference control between a base station and a user equipment in an aerial vehicle. Logic may receive capabilities information from a user device to indicate that the user device is part of an aerial vehicle (AV-UE). Logic may transmit a measurement configuration to establish a trigger event based on a height or other measurement to instruct the AV-UE to transmit, in response to detection of the trigger event, a measurement report to the base station comprising interference information for downlink communications.

In US 2018/0270818A1, an apparatus may be a user equipment (UE), the UE receives a grant for uplink communication and determines a reporting sub0frame based on the grant. In addition, the UE determines whether to select, as a reference sub-frame, a triggering sub-frame in which the grant is received or a sub-frame before the reporting sub-frame. The UE transmits, in the reporting sub-frame, channel state information (CSI) measured in the reference sub-frame.

### SUMMARY

The objective of embodiments of this application is to provide a method and device for transmitting an aperiodic positioning report, which can solve a problem that a positioning report has a high delay.

To solve the foregoing technical problem, this application is implemented as follows:
According to a first aspect, embodiments of this application provide a method for transmitting an aperiodic positioning report, applied to a terminal device and defined in claim 1.
According to a second aspect, embodiments of this application provide a method for transmitting an aperiodic positioning report, applied to a network side device and defined in claim 11.
According to a third aspect, the embodiments of this application provide a terminal device, which is defined in claim 14.
According to a fourth aspect, the embodiments of this application provide a network side device, which is defined in claim 15.

Further advantages embodiments of the present disclosure are indicated in independent claims.

### BRIEF DESCRIPTION OF THE DRAWINGS

FIG. 1 is a schematic flowchart of a method for transmitting an aperiodic positioning report applied to a terminal device according to an embodiment of this application;
FIG. 2 is a schematic flowchart of a method for transmitting an aperiodic positioning report applied to a network side device according to an embodiment of this application;
FIG. 3 is a schematic structural diagram of a terminal device according to an embodiment of this application;
FIG. 4 is a schematic structural diagram of a network side device according to an embodiment of this application; and
FIG. 5 is a schematic structural diagram of a terminal device according to another embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art based on the embodiments of this application without creative efforts shall fall within the protection scope of this application.

The terms such as "first" and "second" in the specification and the claims of this application are used for distinguishing similar objects, but are not used for describing a specific sequence or order. It is to be understood that data used in this way is interchangeable in proper circumstances, so that the embodiments of this application can be implemented in a sequence other than the sequence illustrated or described herein. In addition, "and/or" in the specification and the claims represents at least one of connected objects, and the character "/" generally represents an "or" relationship between the associated objects. For example, A and/or B represents the following three cases: only A exists, only B exists, and both A and B exist. Similarly, at least one of A and B represents the following three cases: only A exists, only B exists, and both A and B exist.

Hereinafter, a method for transmitting an aperiodic positioning report provided in the embodiments of this application is described in detail by using specific embodiments and application scenarios thereof with reference to the accompanying drawings.

The method in the embodiments of this application is applied to a terminal device. The terminal device, that is, a user equipment (User Equipment, UE), may refer to an access terminal, a subscriber unit, a subscriber station, a mobile station, a mobile console, a remote station, a remote terminal, a mobile device, a user terminal, a terminal, a wireless communications device, a user agent, or a user apparatus. The terminal device may further be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device or a computing device having a wireless communication function, another processing device connected to a wireless modem, a vehicle device, or a wearable device.

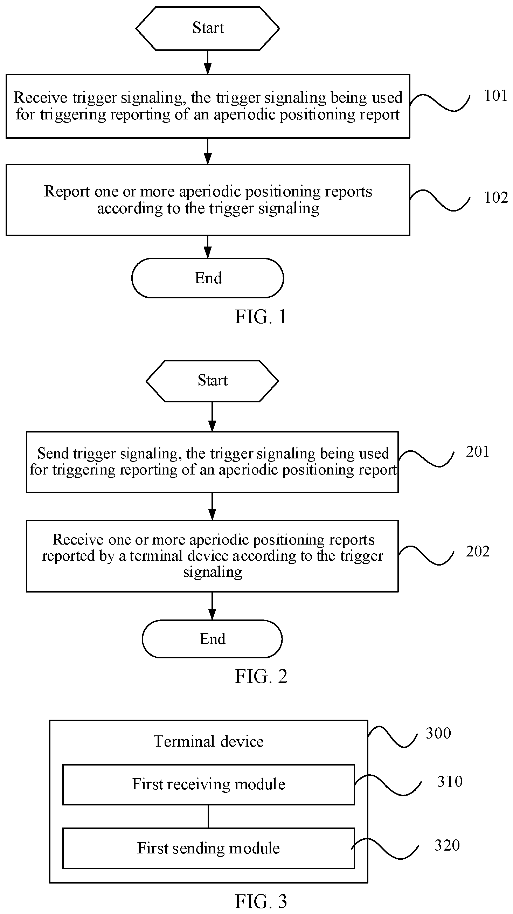

As shown in FIG. 1, a method for transmitting an aperiodic positioning report in an embodiment of this application, applied to a terminal device, includes:
Step 101: Receive trigger signaling, the trigger signaling being used for triggering reporting of an aperiodic positioning report.

The trigger signaling is signaling sent by a network side device for triggering the terminal device to perform reporting of an aperiodic positioning report. The network side device may be a position server or a serving base station. In this step, by receiving the trigger signaling, a requirement of reporting the aperiodic positioning report is known, and then a next step is executed.

Step 102: Report one or more aperiodic positioning reports according to the trigger signaling.

In this step, after the trigger signaling is received in step 101, one or more aperiodic positioning reports are reported to the network side device according to the trigger signaling.

In this way, according to step 101 and step 102, after the terminal device receives the trigger signaling used for triggering reporting of an aperiodic positioning report, the terminal device can report one or more aperiodic positioning reports in time and feed back required positioning information in a timelier manner, thereby reducing the delay.

Optionally, the aperiodic positioning report includes a corresponding positioning report identifier.

The positioning report identifier is used for identifying each aperiodic positioning report. In this embodiment, the corresponding aperiodic positioning report can be determined by the positioning report identifier.

Optionally, the aperiodic positioning report includes a corresponding positioning manner.

Specifically, the positioning manner is a positioning method or positioning technology. The positioning method includes, but is not limited to, a downlink time difference of arrival positioning method DL-TDOA, a downlink angle of departure positioning method DL-AOD, a network-assisted satellite positioning positioning method A-GNSS, and the like. In this way, the corresponding aperiodic positioning report can be determined by the positioning method. For example, reports in different positioning methods may correspond to different positioning report identifiers report IDs. For example, a measurement result of the DL-TDOA positioning method may correspond to a report ID 1, and a measurement of the UL-TDOA positioning method may correspond to a report ID 2.

Optionally, the aperiodic report may also be related to the type of a reference signal used for positioning measurement. For example, different reports may correspond to the measurement results of periodic, aperiodic, and semi-persistent PRSs.

The trigger signaling includes, but is not limited to, at least one of the following:
second information, used for indicating an uplink resource used for reporting;
third information, used for indicating a time offset between the uplink resource used for reporting and the trigger signaling;
fourth information, used for indicating a type of reported positioning information;
fifth information, used for indicating a positioning manner of the reported positioning information; or
sixth information, used for indicating one or more trigger states, where each trigger state is associated with the one or more aperiodic positioning reports.

The trigger signaling further includes first information, used for indicating to report part or all of the aperiodic positioning reports.

If the first information indicates to report part of the aperiodic positioning reports, which part of the aperiodic positioning reports is reported specifically may be indicated by the positioning report identifier. The second information may further indicate an uplink resource used for reporting among a plurality of uplink resources configured, such as indicating one of the uplink resources. For the sixth information indicating one or more trigger states, each trigger state may be used for triggering one or more aperiodic positioning reports associated therewith. That is, if the sixth information indicates a trigger state A, one or more aperiodic positioning reports associated with the trigger state A are triggered.

In this embodiment, the type of positioning information includes, but is not limited to, at least one of the following:
event (Event) information;
a measurement result;
a position estimation;
a differential measurement result; or
a differential position estimation.

The event information includes, but is not limited to, at least one of area event (Area Event) information, motion event (Motion Event) information, and UE availability (UE Availability). Specifically, the area event information is an event in which the UE enters, leaves or stays in a predefined geographical area; the motion event information is an event in which the UE moves more than a predefined straight line distance from a previous position; and the UE availability is any event in which a 5G core network establishes contact with the UE.

The measurement result and/or position estimation may be a current (Current) measurement result and/or position estimation, such as a latest measurement result and/or position estimation obtained after the trigger signaling is received; or may be a last known (Last Known) measurement result and/or position estimation, such as a latest measurement result and/or position estimation obtained before the trigger signaling is received; or may be an initial (Initial) measurement result and/or position estimation, such as a measurement result and/or position estimation of an initial stage of call setup in a case of emergency positioning; or a measurement result and/or position estimation within a measurement time window, which is not listed one by one herein.

The fourth information indicates a type of the reported positioning information, so that the terminal device reports the positioning information in the corresponding type based on the indication of the fourth information.

The fifth information indicates a positioning manner of the reported positioning information, so that the terminal device reports the positioning information in the corresponding positioning manner based on the indication of the fifth information.

Optionally, the trigger signaling is sent to the terminal device in at least one of the following manners:
the trigger signaling being sent or triggered by a position server;
the trigger signaling being recommended or indicated to a serving base station through signaling by the position server, and is sent or triggered through signaling by the serving base station; or
the trigger signaling being sent to the position server through signaling by the serving base station, the trigger signaling being sent or triggered through signaling by the position server.

The trigger signaling may alternatively be recommended or indicated to the serving base station through signaling by the position server, and is sent through signaling by the serving base station. Furthermore, after the trigger signaling is recommended or indicated to a serving gNB by the position server, the serving gNB determines whether/how to send the trigger signaling to the UE. Certainly, the serving gNB may feed back, to the position server, whether the trigger signaling is successfully sent, and if the trigger signaling is not successfully sent, the serving gNB may further feed back reason information to the position server. Optionally, after the trigger signaling is recommended or indicated to the serving gNB by the position server, the serving gNB determines whether/how to send the trigger signaling to the UE, and then the serving gNB further needs to feed back the determined information to the position server.

In this embodiment, the signaling between the serving gNB and the UE may be at least one of radio resource control signaling RRC, multimedia access control unit signaling MACCE, downlink control signaling DCI, broadcast signaling, and the like. The signaling between the serving gNB and the position server may be at least one of new radio positioning protocol A signaling NRPPa, long term evolution positioning protocol A signaling LPPa, and the like. The signaling between the position server and the UE may be long term evolution positioning protocol signaling LPP or the like. Certainly, the serving gNB may also be referred to as a serving cell. The position server may be a local management function LMF or an evolved serving mobile location center E-SMLC.

Optionally, the trigger signaling is downlink control signaling.

Preferably, the DCI is used as the trigger signaling.

Furthermore, preferably, the serving gNB is used as a network device for triggering.

For the DCI used as the trigger signaling, optionally, a radio network temporary identifier used for scrambling the downlink control signaling is a radio network temporary identifier associated with the aperiodic positioning report.

The radio network temporary identifier RNTI used for scrambling the DCI is, for example, ap-pos-RNTI or Sp-pos-RNTI, where ap means aperiodic, and sp means semi-persistent. In this way, after receiving the DCI through a blind detection, the terminal device can report the aperiodic positioning report based on the triggering of the DCI.

In addition, in order to implement the reporting of the aperiodic positioning report, in the embodiment of this application, Before the reporting one or more aperiodic positioning reports or before the receiving trigger signaling by the terminal device, the method further includes: obtaining configuration information of the aperiodic positioning report, the configuration information including at least one of the following:
a positioning report identifier;
configuration information of an uplink resource;
a type of positioning information;
a positioning manner of the positioning information;
a feedback time;
service quality information; or
priority information for reporting the positioning information.

The feedback time of the configuration information of the aperiodic positioning report is used for indicating a latest time for the terminal device to report the aperiodic positioning, and the latest time is preferably a moment when the trigger signaling is received + a feedback time t. The service quality information of the configuration information of the aperiodic positioning report may include accuracy and a delay requirement. The priority information for reporting the positioning information of the configuration information of the aperiodic positioning report is used for indicating the priority of reporting the positioning information by the terminal device, so that the terminal device gives priority to reporting the positioning information with a higher priority in the uplink resource.

Optionally, the configuration information of the uplink resource includes time domain configuration information of the uplink resource and/or frequency domain configuration information of the uplink resource.

The time domain configuration information includes, but is not limited to, at least one of the following:
a time offset between the uplink resource and the trigger signaling;
a number of symbols and symbol positions being occupied by the uplink resource in a time slot;
a period of the uplink resource;
a time interval of the uplink resource; or
a number of uplink resources.

In order to specify the configuration of the uplink resource, the configuration information of the aperiodic positioning report includes the time domain configuration information and/or frequency domain configuration information of the uplink resource. In the time domain configuration information of the uplink resource, for a time offset K between the uplink resource and the trigger signaling, there may be a plurality of values of K, and the unit of K may be symbol, slot, ms, or the like.

Optionally, after obtaining the configuration information of the aperiodic positioning report, the method further includes:
obtaining a trigger state configuration associated with the configuration information, where the trigger state configuration includes one or more trigger states, and each trigger state is used for associating the one or more aperiodic positioning reports.

**In** this embodiment, the configuration information of the aperiodic positioning report may be sent by the network side device, optionally, the configuration information is sent to the terminal device in at least one of the following manners:
the configuration information being sent through signaling by a position server;
after the configuration information being recommended or indicated to a serving base station through signaling by the position server, the configuration information being sent through signaling by the serving base station; or
after the configuration information being sent to the position server through signaling by the serving base station, the configuration information being sent through signaling by the position server.

Optionally, the configuration information may be all sent to the UE by the position server. Furthermore, at least part of the information in the configuration information of the aperiodic positioning report requires interaction between the position server and the serving gNB, such as at least one of the configuration information of the uplink resource associated with the aperiodic positioning report, trigger state configuration, positioning report identifier ID, and the like. The interaction between the position server and the serving gNB includes at least one of the following:
a) the position server requesting interaction information from the serving gNB; or
b) the serving gNB sending interactive information to the position server.

A part of the configuration information of the aperiodic positioning report is sent by the position server to the UE, and the other part is sent by the serving gNB to the UE. Furthermore, the part of the configuration information sent by the serving gNB to the UE is, for example, at least one of the configuration information of the uplink resource associated with the aperiodic positioning report, trigger state configuration, positioning report ID information, and the like. Furthermore, the part of the configuration information sent by the serving gNB to the UE may be recommended or indicated to the serving gNB by the position server, and then the serving gNB determines whether/how to send the part of the configuration information to the UE. Optionally, when the serving gNB feeds back, to the position server, whether the part of the configuration information is successfully sent, if the part of the configuration information is not sent successly, the serving gNB further feeds back reason information to the position server, for example, there is no suitable uplink resource. Optionally, after the part of the configuration information is recommended or indicated to the serving gNB by the position server, the serving gNB determines whether/how to send the part of the configuration information to the UE, and then the serving gNB further needs to feed back the determined information to the position server.

The configuration information of the aperiodic positioning report may be all sent to the UE by the serving gNB. Furthermore, the configuration information of the aperiodic positioning report is sent to the UE by the serving gNB, where the configuration information may be obtained in at least one of the following manners:
a) after the configuration information being recommended or indicated to the serving gNB by the position server, the serving gNB determining whether/how to send the configuration information to the UE; or
b) after the configuration information being sent to the serving gNB by the position server, the configuration information being sent to the UE by the serving gNB.

Optionally, the serving gNB feeds back, to the position server, whether the configuration information is successfully sent. If the configuration information is not successfully sent, the serving gNB further feeds back reason information to the position server, for example, there is no suitable uplink resource, or which configuration information is not successfully sent. Optionally, after the configuration information is recommended or indicated to the serving gNB by the position server, the serving gNB determines whether/how to send the configuration information to the UE, and then the serving gNB further needs to feed back the determined information to the position server.

Certainly, the configuration information of the aperiodic positioning report may alternatively be agreed by a protocol or may be pre-configured, or the like.

In addition, in this embodiment, the configuration information and/or trigger signaling may also be referred to as the aperiodic positioning report request signaling. The configuration information and trigger signaling may be implemented by same signaling. For example, signaling A may be used for triggering the reporting of the aperiodic positioning report, and may also be used for configuring the reporting of the aperiodic positioning report. The configuration information may be before or after the trigger signaling, or may be included in the trigger signaling.

Optionally, the UE finally determines how to report the aperiodic report according to the trigger signaling cooperated with configuration information.

Optionally, for the priority information for reporting the positioning information, step 102 includes:
preferentially reporting positioning information with a high priority in the one or more aperiodic positioning reports. Optionally, reporting of positioning information with a priority not high may be delayed. For example, the positioning information with a priority not high may be reported in a periodic report after the aperiodic report, or may be reported in an uplink resource before the feedback time is met.

In this embodiment, optionally, the aperiodic positioning report includes, but is not limited to, at least one of the following:
a positioning report identifier;
positioning information;
a reason for failure of reporting the positioning information;
a positioning manner corresponding to the positioning information;
a reporting indication of remaining positioning information; or
a confirmation request.

In this way, the terminal information may inform the network side device of at least one of the following: the positioning report identifier, the positioning information, the reason for failure of reporting the positioning information, the positioning manner corresponding to the positioning information, the reporting indication of the remaining positioning information, or the confirmation request.

The positioning information includes, but is not limited to, at least one of the following:
event (Event) information;
a measurement result;
a position estimation;
a differential measurement result; or
a differential position estimation.

The event information includes, but is not limited to, at least one of area event (Area Event) information, motion event (Motion Event) information, and UE availability (UE Availability). Specifically, the area event information is an event in which the UE enters, leaves or stays in a predefined geographical area; the motion event information is an event in which the UE moves more than a predefined straight line distance from a previous position; and the UE availability is any event in which a 5G core network establishes contact with the UE.

The measurement result and/or position estimation may be a current (Current) measurement result and/or position estimation, such as a latest measurement result and/or position estimation obtained after the trigger signaling is received; or may be a last known (Last Known) measurement result and/or position estimation, such as a latest measurement result and/or position estimation obtained before the trigger signaling is received; or may be an initial (Initial) measurement result and/or position estimation, such as a measurement result and/or position estimation of an initial stage of call setup in a case of emergency positioning; or a measurement result and/or position estimation within a measurement time window, which is not listed one by one herein.

The reason for failure of reporting the positioning information may include, but is not limited to, at least one of the following:
a) the requested positioning information being not available currently;
b) the requested positioning information being not defined;
c) the requested positioning manner being not supported; or
d) the measurement of the positioning reference signal failing.

The reporting indication of the remaining positioning information is used for indicating whether there is remaining positioning information, so as to perform subsequent processing. The confirmation request is used to request the network side device to feedback whether the aperiodic positioning report is successfully received. Certainly, if the UE fails to receive an acknowledgement ACK fed back by the network side device within a period of time, the UE re-reports the aperiodic positioning report. The aperiodic positioning report includes the information that the UE fails to receive the ACK fed back by the network side device.

Optionally, the aperiodic report may be reported to the position server or the serving gNB through signaling by the UE, or may be reported to the serving gNB through signaling by the UE first, and then packed and sent to the position server through signaling by the serving gNB.

Optionally, in this embodiment, the positioning information in the aperiodic positioning report includes a measurement result of a positioning reference signal.

For the aperiodic positioning report including the measurement result of a positioning reference signal PRS, optionally, the positioning reference signal includes: a periodic positioning reference signal, aperiodic positioning reference signal, or semi-persistent positioning reference signal, and/or other reference signals for positioning. Other reference signals for positioning may be a synchronization signal SSB, a channel state information reference signal CSI-RS, and the like.

Optionally, before reporting the one or more aperiodic positioning reports, the method further includes:
obtaining indication information of the positioning reference signal, the indication information including, but is not limited to, at least one of the following:
a positioning reference signal resource set identifier;
a positioning reference signal resource identifier;
a sending and transmission point identifier; or
a positioning frequency layer identifier.

In this way, only through the indication information of the positioning reference signal, the measurement can be performed and the corresponding measurement result can be obtained and reported. Certainly, in the indication information of the positioning reference signal, the PRS resource set identifier, the PRS resource identifier, the emission and transmission point identifier, and the positioning frequency layer identifier may not be limited to one, but may alternatively be multiple, and may be indicated in the form of a list in the indication information. The indication information of the positioning reference signal may also be included in the configuration information of the aperiodic positioning report.

Optionally, in this embodiment, for a plurality of PRS, the measurement result of the positioning reference signal is a measurement result of the positioning reference signal not later than a reference time.

Optionally, the measurement result of the positioning reference signal not later than the reference time may also be understood as the measurement result of the latest positioning reference signal not later than the reference time.

Optionally, if the UE is configured with high level parameters (such as time restriction for positioning measurements (Time Restriction For Positioning Measurements)), the positioning reference signal corresponding to the measurement result is a positioning reference signal that is not later than the reference time and closest to the reference time; and if the UE is not configured with the parameters, the positioning reference signal corresponding to the measurement result only needs to be not later than the reference time.

If the measurement result of the positioning reference signal is the measurement result of the positioning reference signal which is not later than the reference time and closest to the reference time, the latest positioning reference signal is a positioning reference signal or a PRS occurrence corresponding to a positioning reference signal set. The PRS occurrence represents a PRS resource or a PRS resource set for a continuous time instance (Time Instance). For a periodic or semi-persistent PRS, the latest PRS can be understood as a PRS occurrence of a latest period.

If the measurement result of the positioning reference signal is the measurement result of the positioning reference signal not later than the reference time, the measurement result of the positioning reference signal may depend on the UE implementation. For example, the measurement result may be a filtered (averaged) measurement result of a plurality of PRS occasions before the reference time, or may be a measurement result of a plurality of PRS occasions before the reference time.

Certainly, whether the measurement result of the positioning reference signal is the measurement result of the positioning reference signal which is not later than the reference time and is closest to the reference time, or the measurement result of the positioning reference signal not later than the reference time may be indicated by the network side device, agreed by a protocol, or selected by the UE.

For example, if the network side device indicates a using 1-bit information, the measurement result of the positioning reference signal is the measurement result of the positioning reference signal which is not later than the reference time and is closest to the reference time; and if the network side device indicates b using 1-bit information, the measurement result of the positioning reference signal is the measurement result of the positioning reference signal not later than the reference time. Alternatively, in the network side device configuration, a parameter such as a measurement restriction parameter is preset to be 'true', and the UE reports the measurement result of the positioning reference signal which is not later than the reference time and is closest to the reference time, the UE reports the measurement result of the positioning reference signal which is not later than the reference time.

Optionally, the reference time is a moment when the terminal device receives the trigger signaling, or the reference time is a moment corresponding to a preset downlink resource before an uplink resource used for reporting the measurement result.

For example, the reference time is a moment T1 when the terminal device receives the trigger signaling, where T1 may correspond to a downlink time slot or downlink symbol. Alternatively, the reference time is a certain downlink moment of a T2 time before the uplink resource used for reporting the measurement result. T2 may be predefined, indicated by the network, or selected by the UE, and may depend on the capability of the UE. The unit of T2 is consistent with the unit of the reference time.

In addition, in this embodiment, the moment of receiving the trigger signaling of the aperiodic positioning report and the moment of reporting the uplink resource of the aperiodic positioning information meet a preset relationship. Optionally, a first uplink symbol of an uplink resource used by the one or more aperiodic positioning reports is later than a first uplink symbol after a target moment.

The target moment is a moment after an end moment of the trigger signaling and away from the end moment of the trigger signaling with an interval of a first duration; or the target moment is a moment after an end moment of a last symbol occupied by a latest resource in measurement resources and away from the end moment of the last symbol with an interval of a second duration. Optionally, 'later than' may be understood as 'not earlier than'.

In this way, the time position requirement of the first uplink symbol of the uplink resource carrying the aperiodic positioning report is not earlier than any one of the following symbol positions:
a first uplink symbol after a Z1 time after an end moment of the trigger signaling; and
a first uplink symbol after a Z2 time after an end moment of the last symbol occupied by the latest resource in the measurement resource.

Z1 is a first duration, and Z2 is a second duration. Z1 and Z2 may be predefined, indicated by the network, or selected by the UE, and may depend on the capability of the UE. The unit of Z1 and Z2 may be symbol, slot, ms, or the like. The measurement resource may be an aperiodic, periodic, or semi-persistent measurement resource, such as an aperiodic PRS resource.

In this embodiment, if the moment of receiving the trigger signaling of the aperiodic positioning report and the moment of reporting the uplink resource of the aperiodic positioning information do not meet the above content, the UE does not report the positioning information or the measurement result, or the UE does not report the latest positioning information or the measurement result.

According to the above content, in the configuration information of the aperiodic positioning report, there are a plurality of time offsets between the uplink resource for an aperiodic positioning report and the trigger signaling. Optionally, in a case that the triggering signaling triggers a plurality of positioning reports, a maximum time offset configured by each positioning report is adopted as a time offset between an uplink resource used for reporting each aperiodic positioning report and the triggering signaling.

Optionally, in a case that a positioning manner of the one or more aperiodic positioning reports is multi-round trip time multi-RTT positioning, the trigger signaling is further used for triggering sending of an aperiodic uplink positioning reference signal (for example, an aperiodic SRS for positioning).

For the trigger signaling further used for triggering sending of an aperiodic uplink positioning reference signal, optionally, the trigger signaling includes: seventh information, used for indicating the sending of the aperiodic uplink positioning reference signal.

For example, the seventh information is indication information for triggering sending of an aperiodic SRS, that is, SRS trigger states information.

Optionally, positioning information in the aperiodic positioning report is associated with a sending moment of the aperiodic uplink positioning reference signal.

For example, the positioning information in the aperiodic positioning report is a measurement result of RX to TX. TX is a sending moment of the aperiodic SRS, and RX is a receiving moment of a preset downlink signal, where the preset downlink signal may be a downlink positioning reference signal.

In addition, in this embodiment, there is a case where the network side device does not receive the aperiodic positioning report of the UE for a period of time. Therefore, optionally, the network side device sends another piece of trigger signaling. That is, the trigger signaling is resent by the network side device in a case of not receiving the positioning report.

In this way, if the network side device does not receive the aperiodic positioning report of the UE in a specified time, the network side device resends the trigger signaling to trigger the UE to report the aperiodic positioning report.

In addition, in this embodiment, Before the receiving trigger signaling or before the reporting one or more aperiodic positioning reports, the method further includes:
reporting capability information, the capability information indicating whether the terminal device supports the reporting of the aperiodic positioning report.

In this way, the network side device can know whether the terminal device supports the reporting of the aperiodic positioning report, to perform further indications. For example, the network side device determines whether to trigger the aperiodic positioning report according to the capability information of the UE.

Optionally, the capability information is associated with a positioning manner and/or a positioning mode.

That is, whether the terminal device supports the reporting of the aperiodic positioning report is related to the positioning manner, or is related to the positioning mode. The positioning mode may be UE-based positioning, UE-assist positioning, or standalone. The capability information may be given in a manner of bitmap (Bitmap) according to the positioning manner or positioning mode supported by the UE. For example, if the UE supports three positioning modes, the UE may report a 3-Bit bitmap, which indicates the capability of the aperiodic report of the UE under different positioning modes. For example, '101' means that the UE supports the aperiodic report in UE-based positioning (corresponding to a first bit '1'), the UE does not support the aperiodic report in UE-assist positioning (corresponding to a second bit '0'), and the UE supports aperiodic report in standalone positioning (corresponding to a third bit '1').

In this embodiment, the aperiodic positioning report may also be understood as a semi-persistent positioning report.

To sum up, in the method of the embodiment of this application, after the trigger signaling used for triggering reporting of an aperiodic positioning report is received, one or more aperiodic positioning reports can be reported in time, and required positioning information can be fed back in a timelier manner, thereby reducing the delay.

As shown in FIG. 2, a method for transmitting an aperiodic positioning report in an embodiment of this application, applied to a network side device, includes:
Step 201: Send trigger signaling, the trigger signaling being used for triggering reporting of an aperiodic positioning report.

The trigger signaling is signaling sent by the network side device for triggering the terminal device to perform reporting of an aperiodic positioning report. The network side device may be a position server or a serving base station.

Step 202: Receive one or more aperiodic positioning reports reported by a terminal device according to the trigger signaling.

In this step, after the terminal device receives the trigger signaling sent in step 201, the network side device can receive one or more aperiodic positioning reports reported by the terminal device according to the trigger signaling, and obtain required positioning information in time, thereby reducing the delay.

Optionally, the aperiodic positioning report includes a corresponding positioning report identifier.

Here, the positioning report identifier is used for identifying each aperiodic positioning report. In this embodiment, the corresponding aperiodic positioning report can be determined by the positioning report identifier.

Optionally, the aperiodic positioning report comprises a corresponding positioning manner.

Specifically, the positioning manner is a positioning method or positioning technology. The positioning method includes, but is not limited to, DL-TDOA, DL-AOD, A-GNSS, and the like. In this way, the corresponding aperiodic positioning report can be determined by the positioning method. For example, reports in different positioning methods may correspond to different positioning report identifiers report IDs. For example, a measurement result of the DL-TDOA positioning method may correspond to a report ID 1, and a measurement of the UL-TDOA positioning method may correspond to a report ID 2.

Optionally, the aperiodic report may also be related to the type of a reference signal used for positioning measurement. For example, different reports may correspond to the measurement results of periodic, aperiodic, and semi-persistent PRSs.

The trigger signaling includes, but is not limited to, at least one of the following:
second information, used for indicating an uplink resource used for reporting;
third information, used for indicating a time offset between the uplink resource used for reporting and the trigger signaling;
fourth information, used for indicating a type of reported positioning information;
fifth information, used for indicating a positioning manner of the reported positioning information; or
sixth information, used for indicating one or more trigger states, where each trigger state is associated with the one or more aperiodic positioning reports.

The trigger signaling further includes first information, used for indicating to report part or all of the aperiodic positioning reports.

Optionally, before the sending trigger signaling, the method further includes:
sending configuration information of the aperiodic positioning report, the configuration information including, but is not limited to, at least one of the following:
a positioning report identifier;
configuration information of an uplink resource;
a type of positioning information;
a positioning manner of the positioning information;
a feedback time;
service quality information; or
priority information for reporting the positioning information.

Optionally, the configuration information of the uplink resource includes time domain configuration information of the uplink resource and/or frequency domain configuration information of the uplink resource.

The time domain configuration information includes, but is not limited to, at least one of the following:
a time offset between the uplink resource and the trigger signaling;
a number of symbols and symbol positions being occupied by the uplink resource in a time slot;
a period of the uplink resource;
a time interval of the uplink resource; or
a number of uplink resources.

Optionally, the aperiodic positioning report includes, but is not limited to, at least one of the following:
a positioning report identifier;
positioning information;
a reason for failure of reporting the positioning information;
a positioning manner corresponding to the positioning information;
a reporting indication of remaining positioning information; or
a confirmation request.

Optionally, positioning information in the aperiodic positioning report includes a measurement result of a positioning reference signal.

Optionally, the positioning reference signal includes: a periodic positioning reference signal, aperiodic positioning reference signal, or semi-persistent positioning reference signal, and/or other reference signals for positioning.

Optionally, before the receiving one or more aperiodic positioning reports reported by a terminal device according to the trigger signaling, the method further includes:
sending indication information of the positioning reference signal, the indication information including, but is not limited to, at least one of the following:
a positioning reference signal resource set identifier;
a positioning reference signal resource identifier;
a sending and transmission point identifier; or
a positioning frequency layer identifier.

Optionally, the measurement result of the positioning reference signal is a measurement result of the positioning reference signal not later than a reference time.

Optionally, the reference time is a moment when the terminal device receives the trigger signaling, or the reference time is a moment corresponding to a preset downlink resource before an uplink resource used for reporting the measurement result.

Optionally, a first uplink symbol of an uplink resource used by the one or more aperiodic positioning reports is later than a first uplink symbol after a target moment.

The target moment is a moment after an end moment of the trigger signaling and away from the end moment of the trigger signaling with an interval of a first duration; or the target moment is a moment after an end moment of a last symbol occupied by a latest resource in measurement resources and away from the end moment of the last symbol with an interval of a second duration.

Optionally, in a case that the triggering signaling triggers a plurality of positioning reports, a maximum time offset configured by each positioning report is adopted as a time offset between an uplink resource used for reporting each aperiodic positioning report and the triggering signaling.

Optionally, in a case that a positioning manner of the one or more aperiodic positioning reports is multi-round trip time multi-RTT positioning, the trigger signaling is further used for triggering sending of an aperiodic uplink positioning reference signal.

Optionally, the trigger signaling includes: seventh information, used for indicating the sending of the aperiodic uplink positioning reference signal.

Optionally, positioning information in the aperiodic positioning report is associated with a sending moment of the aperiodic uplink positioning reference signal.

Optionally, the trigger signaling is downlink control signaling.

Optionally, a radio network temporary identifier used for scrambling the downlink control signaling is the radio network temporary identifier associated with the aperiodic positioning report.

Optionally, the trigger signaling is resent by the network side device in a case of not receiving the positioning report.

Optionally, before sending the trigger signaling or before receiving the one or more aperiodic positioning reports reported by a terminal device according to the trigger signaling, the method further includes:
receiving reported capability information, the capability information indicating whether the terminal device supports the reporting of the aperiodic positioning report.

Optionally, the capability information is associated with a positioning manner and/or a positioning mode.

FIG. 3 is a block diagram of a terminal device according to an embodiment of this application. A terminal device 300 shown in FIG. 3 includes a first sending module 310 and a first receiving module 320.

The first receiving module 310 is configured to receive trigger signaling, the trigger signaling being used for triggering reporting of an aperiodic positioning report.

The first sending module 320 is configured to report one or more aperiodic positioning reports according to the trigger signaling.

The trigger signaling includes, but is not limited to, at least one of the following:
second information, used for indicating an uplink resource used for reporting;
third information, used for indicating a time offset between the uplink resource used for reporting and the trigger signaling;
fourth information, used for indicating a type of reported positioning information;
fifth information, used for indicating a positioning manner of the reported positioning information; or
sixth information, used for indicating one or more trigger states, where each trigger state is associated with the one or more aperiodic positioning reports.

The trigger signaling further includes first information, used for indicating to report part or all of the aperiodic positioning reports.

Optionally, the terminal device further includes:
a first obtaining module, configured to obtain configuration information of the aperiodic positioning report, the configuration information including, but is not limited to, at least one of the following:
a positioning report identifier;
configuration information of an uplink resource;
a type of positioning information;
a positioning manner of the positioning information;
a feedback time;
service quality information; or
priority information for reporting the positioning information.

Optionally, the first obtaining module is further configured to:
obtain a trigger state configuration associated with the configuration information, where the trigger state configuration includes one or more trigger states, and each trigger state is used for associating the one or more aperiodic positioning reports.

Optionally, the configuration information of the uplink resource includes time domain configuration information of the uplink resource and/or frequency domain configuration information of the uplink resource.

The time domain configuration information includes, but is not limited to, at least one of the following:
a time offset between the uplink resource and the trigger signaling;
a number of symbols and symbol positions being occupied by the uplink resource in a time slot;
a period of the uplink resource;
a time interval of the uplink resource; or
a number of uplink resources.

Optionally, the aperiodic positioning report includes, but is not limited to, at least one of the following:
a positioning report identifier;
positioning information;
a reason for failure of reporting the positioning information;
a positioning manner corresponding to the positioning information;
a reporting indication of remaining positioning information; or
a confirmation request.

Optionally, positioning information in the aperiodic positioning report includes a measurement result of a positioning reference signal.

Optionally, the positioning reference signal includes: a periodic positioning reference signal, aperiodic positioning reference signal, or semi-persistent positioning reference signal, and/or other reference signals for positioning.

Optionally, the terminal device further includes:
a second obtaining module, configured to obtain indication information of the positioning reference signal, the indication information including, but is not limited to, at least one of the following:
a positioning reference signal resource set identifier;
a positioning reference signal resource identifier;
a sending and transmission point identifier; or
a positioning frequency layer identifier.

Optionally, the measurement result of the positioning reference signal is a measurement result of the positioning reference signal not later than a reference time.

Optionally, the reference time is a moment when the terminal device receives the trigger signaling, or the reference time is a moment corresponding to a preset downlink resource before an uplink resource used for reporting the measurement result.

Optionally, a first uplink symbol of an uplink resource used by the one or more aperiodic positioning reports is later than a first uplink symbol after a target moment.

The target moment is a moment after an end moment of the trigger signaling and away from the end moment of the trigger signaling with an interval of a first duration; or the target moment is a moment after an end moment of a last symbol occupied by a latest resource in measurement resources and away from the end moment of the last symbol with an interval of a second duration.

Optionally, in a case that the triggering signaling triggers a plurality of positioning reports, a maximum time offset configured by each positioning report is adopted as a time offset between an uplink resource used for reporting each aperiodic positioning report and the triggering signaling.

Optionally, in a case that a positioning manner of the one or more aperiodic positioning reports is multi-round trip time multi-RTT positioning, the trigger signaling is further used for triggering sending of an aperiodic uplink positioning reference signal.

Optionally, the trigger signaling includes: seventh information, used for indicating the sending of the aperiodic uplink positioning reference signal.

Optionally, positioning information in the aperiodic positioning report is associated with a sending moment of the aperiodic uplink positioning reference signal.

Optionally, the aperiodic positioning report includes a corresponding positioning report identifier.

Optionally, the aperiodic positioning report comprises a corresponding positioning manner.

Optionally, the configuration information is sent to the terminal device in at least one of the following manners:
the configuration information being sent through signaling by a position server;
after the configuration information being recommended or indicated to a serving base station through signaling by the position server, the configuration information being sent through signaling by the serving base station; or
after the configuration information being sent to the position server through signaling by the serving base station, the configuration information being sent through signaling by the position server.

Optionally, the trigger signaling is sent to the terminal device in at least one of the following manners:
the trigger signaling being sent by a position server;
after the trigger signaling being recommended or indicated to a serving base station through signaling by the position server, the trigger signaling being sent through signaling by the serving base station; or
after the trigger signaling is sent to the position server through signaling by the serving base station, the trigger signaling being sent through signaling by the position server.

Optionally, the trigger signaling is downlink control signaling.

Optionally, a radio network temporary identifier used for scrambling the downlink control signaling is the radio network temporary identifier associated with the aperiodic positioning report.

Optionally, the trigger signaling is resent by a network side device in a case of not receiving the positioning report.

Optionally, the terminal device further includes:
a capability reporting module, configured to report capability information, the capability information indicating whether the terminal device supports the reporting of the aperiodic positioning report.

Optionally, the capability information is associated with a positioning manner and/or a positioning mode.

Optionally, the first sending module is further configured to:
preferentially report positioning information with a high priority in the one or more aperiodic positioning reports.

The terminal device in the embodiment of this application may be a mobile electronic device or a non-mobile electronic device. Exemplarily, the mobile electronic device may be a mobile phone, a tablet computer, a notebook computer, a palmtop computer, an in-vehicle electronic device, a wearable device, an ultra-mobile personal computer (Ultra-mobile Personal Computer, UMPC), a netbook, a personal digital assistant (Personal Digital Assistant, PDA), or the like; and the non-mobile electronic device may be a server, a network attached storage (Network Attached Storage, NAS), a personal computer (Personal Computer, PC), a television (Television, TV), a teller machine, a self-service machine, or the like, which are not specifically limited in the embodiment of this application.

The terminal device in the embodiment of this application may be a device having an operating system. The operating system may be an Android (Android) operating system, may be an ios operating system, or may be another possible operating system, which is not specifically limited in the embodiment of this application.

The terminal device provided in the embodiment of this application can implement various processes implemented by the terminal device in the method embodiment of FIG. 1. To avoid repetition, details are not described herein again.

After the terminal device of the embodiment of this application receives the trigger signaling used for triggering reporting of an aperiodic positioning report, the terminal device can report one or more aperiodic positioning reports in time and feed back required positioning information in a timelier manner, thereby reducing the delay.

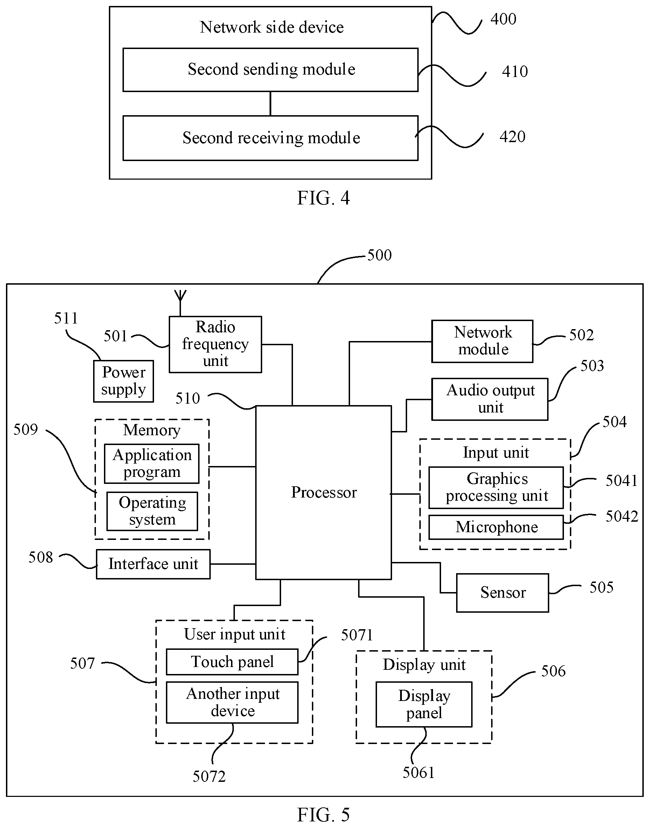

FIG. 4 is a block diagram of a network side device according to an embodiment of this application. A network side device 400 shown in FIG. 4 includes a second sending module 410 and a second receiving module 420.

The second sending module 410 is configured to send trigger signaling, the trigger signaling being used for triggering reporting of an aperiodic positioning report.

The second receiving module 420 is configured to receive one or more aperiodic positioning reports reported by a terminal device according to the trigger signaling.

The trigger signaling includes, but is not limited to, at least one of the following:
second information, used for indicating an uplink resource used for reporting;
third information, used for indicating a time offset between the uplink resource used for reporting and the trigger signaling;
fourth information, used for indicating a type of reported positioning information;
fifth information, used for indicating a positioning manner of the reported positioning information; or
sixth information, used for indicating one or more trigger states, where each trigger state is associated with the one or more aperiodic positioning reports.

The trigger signaling further includes first information, used for indicating to report part or all of the aperiodic positioning reports.

Optionally, the network side device further includes:
a configuration information sending module, configured to send configuration information of the aperiodic positioning report, the configuration information including, but is not limited to, at least one of the following:
a positioning report identifier;
configuration information of an uplink resource;
a type of positioning information;
a positioning manner of the positioning information;
a feedback time;
service quality information; or
priority information for reporting the positioning information.

Optionally, the configuration information of the uplink resource includes time domain configuration information of the uplink resource and/or frequency domain configuration information of the uplink resource.

The time domain configuration information includes, but is not limited to, at least one of the following:
a time offset between the uplink resource and the trigger signaling;
a number of symbols and symbol positions being occupied by the uplink resource in a time slot;
a period of the uplink resource;
a time interval of the uplink resource; or
a number of uplink resources.

Optionally, the aperiodic positioning report includes, but is not limited to, at least one of the following:
a positioning report identifier;
positioning information;
a reason for failure of reporting the positioning information;
a positioning manner corresponding to the positioning information;
a reporting indication of remaining positioning information; or
a confirmation request.

Optionally, positioning information in the aperiodic positioning report includes a measurement result of a positioning reference signal.

Optionally, the positioning reference signal includes: a periodic positioning reference signal, aperiodic positioning reference signal, or semi-persistent positioning reference signal, and/or other reference signals for positioning.

Optionally, the network side device further includes:
an indication information sending module, configured to send indication information of the positioning reference signal, the indication information including, but is not limited to, at least one of the following:
a positioning reference signal resource set identifier;
a positioning reference signal resource identifier;
a sending and transmission point identifier; or
a positioning frequency layer identifier.

Optionally, the measurement result of the positioning reference signal is a measurement result of the positioning reference signal not later than a reference time.

Optionally, the reference time is a moment when the terminal device receives the trigger signaling, or the reference time is a moment corresponding to a preset downlink resource before an uplink resource used for reporting the measurement result.

Optionally, a first uplink symbol of an uplink resource used by the one or more aperiodic positioning reports is later than a first uplink symbol after a target moment.

The target moment is a moment after an end moment of the trigger signaling and away from the end moment of the trigger signaling with an interval of a first duration; or the target moment is a moment after an end moment of a last symbol occupied by a latest resource in measurement resources and away from the end moment of the last symbol with an interval of a second duration.

Optionally, in a case that the triggering signaling triggers a plurality of positioning reports, a maximum time offset configured by each positioning report is adopted as a time offset between an uplink resource used for reporting each aperiodic positioning report and the triggering signaling.

Optionally, in a case that a positioning manner of the one or more aperiodic positioning reports is multi-round trip time multi-RTT positioning, the trigger signaling is further used for triggering sending of an aperiodic uplink positioning reference signal.

Optionally, the trigger signaling includes: seventh information, used for indicating the sending of the aperiodic uplink positioning reference signal.

Optionally, positioning information in the aperiodic positioning report is associated with a sending moment of the aperiodic uplink positioning reference signal.

Optionally, the aperiodic positioning report includes a corresponding positioning report identifier.

Optionally, the aperiodic positioning report includes a corresponding positioning manner.

Optionally, the trigger signaling is downlink control signaling.

Optionally, a radio network temporary identifier used for scrambling the downlink control signaling is a radio network temporary identifier associated with the aperiodic positioning report.

Optionally, the trigger signaling is resent by a network side device in a case of not receiving the positioning report.

Optionally, the network side device further includes:
a third receiving module, configured to receive reported capability information, the capability information indicating whether the terminal device supports the reporting of the aperiodic positioning report.

Optionally, the capability information is associated with a positioning manner and/or a positioning mode.

After the terminal device receives the trigger signaling, the network side device can receive one or more aperiodic positioning reports reported by the terminal device according to the trigger signaling, and obtain required positioning information in time, thereby reducing the delay.

Optionally, the embodiments of this application further provide a communication device, including a processor, a memory, and a program or instruction stored on the memory and executable on the processor, where the program or instruction, when being executed by the processor, implements each process of the embodiments of the steps of the method for transmitting an aperiodic positioning report applied to a terminal device or the method for transmitting an aperiodic positioning report applied to a network side device, and can achieve the same technical effect. To avoid repetition, details are not described herein again.

It is to be noted that, the communication device in the embodiments of this application includes the mobile electronic device and a non-mobile electronic device.

FIG. 5 is a schematic diagram of a hardware structure of a terminal device implementing the embodiments of this application.

The terminal device 500 includes, but is not limited to, components such as a radio frequency unit 501, a network module 502, an audio output unit 503, an input unit 504, a sensor 505, a display unit 506, a user input unit 507, an interface unit 508, a memory 509, a processor 510, and a power supply 511.

A person skilled in the art may understand that the structure of the terminal device shown in FIG. 5 is not intended to limit the terminal device, and the terminal device may include more components or fewer components than those shown in the figure, or some components may be combined, or a different component arrangement may be used. In the embodiment of this application, the terminal device includes, but is not limited to, a mobile phone, a tablet computer, a notebook computer, a palmtop computer, an in-vehicle terminal, a wearable device, a pedometer, and the like.

The radio frequency unit 501 receives trigger signaling, the trigger signaling being used for triggering reporting of an aperiodic positioning report; and
reports one or more aperiodic positioning reports according to the trigger signaling.

After the terminal device receives the trigger signaling used for triggering reporting of an aperiodic positioning report, the terminal device can report one or more aperiodic positioning reports in time and feed back required positioning information in a timelier manner, thereby reducing the delay.

It is to be understood that, in the embodiment of this application, the radio frequency unit 501 may be configured to transmit and receive information or transmit and receive signals during a call. Specifically, the radio frequency unit 501 is configured to receive downlink data from a base station and transmit the downlink data to the processor 510 for processing. In addition, the radio frequency unit 501 transmits uplink data to the base station. Generally, the radio frequency unit 501 includes, but is not limited to, an antenna, at least one amplifier, a transceiver, a coupler, a low noise amplifier, a duplexer, and the like. In addition, the radio frequency unit 501 may further communicate with another device through a wireless communication system and a network.

The terminal device provides the user with wireless broadband Internet access through the network module 502, such as helping the user to send and receive emails, browse web pages, and access streaming media.

The audio output unit 503 may convert audio data received by the radio frequency unit 501 or the network module 502 or stored in the memory 509 into audio signals, and output the audio signals as sounds. In addition, the audio output unit 503 may further provide an audio output (for example, a call signal receiving sound or a message receiving sound) that is related to a specific function executed by the terminal device 500. The audio output unit 503 includes a speaker, a buzzer, a receiver, and the like.

The input unit 504 is configured to receive an audio or video signal. The input unit 504 may include a graphics processing unit (Graphics Processing Unit, GPU) 5041 and a microphone 5042. The graphics processing unit 5041 performs processing on image data of a static picture or a video acquired by an image acquisition apparatus (for example, a camera) in a video acquisition mode or an image acquisition mode. A processed image frame may be displayed on the display unit 506. The image frame processed by the graphics processing unit 5041 may be stored in the memory 509 (or another storage medium) or sent through the radio frequency unit 501 or the network module 502. The microphone 5042 may receive a sound and can process the sound into audio data. The processed audio data may be converted, in a phone call mode, into a format that can be sent to a mobile communication base station through the radio frequency unit 501 to output.

The terminal device 500 further includes at least one sensor 505, such as an optical sensor, a motion sensor, and other sensors. Specifically, the optical sensor includes an ambient light sensor and a proximity sensor. The ambient light sensor can adjust luminance of a display panel 5061 according to brightness of the ambient light. The proximity sensor may switch off the display panel 5061 and/or backlight when the terminal device 500 is moved to the ear. As a type of the motion sensor, an accelerometer sensor may detect magnitudes of acceleration in various directions (generally on three axes), may detect a magnitude and a direction of gravity when the accelerometer sensor is stationary, and may be used to recognize a terminal device posture (for example, switching between landscape orientation and portrait orientation, a related game, and magnetometer posture calibration), a function related to vibration recognition (such as a pedometer and a knock), and the like. The sensor 505 may further include a fingerprint sensor, a pressure sensor, an iris sensor, a molecular sensor, a gyroscope, a barometer, a hygrometer, a thermometer, an infrared sensor, and the like, which is not described herein in detail.

The display unit 506 is configured to display information inputted by the user or information provided for the user. The display unit 506 may include the display panel 5061. The display panel 5061 may be configured in a form of a liquid crystal display (Liquid Crystal Display, LCD), an organic light-emitting diode (Organic Light-Emitting Diode, OLED), or the like.

The user input unit 507 may be configured to receive input digit or character information, and generate a keyboard signal input related to a user setting and function control of the terminal device. Specifically, the user input unit 507 includes a touch panel 5071 and another input device 5072. The touch panel 5071, which is also referred to as a touchscreen, can collect a touch operation of the user on or near the touch panel (for example, an operation of the user on or near the touch panel 5071 by using any suitable object or attachment such as a finger or a touch pen). The touch panel 5071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into touch point coordinates, and transmits the touch point coordinates to the processor 510. In addition, the touch controller receives a command transmitted by the processor 510 and executes the command. In addition, the touch panel 5071 may be implemented by using various types, such as a resistive type, a capacitance type, an infrared type, and a surface acoustic wave type. In addition to the touch panel 5071, the user input unit 507 may further include the another input device 5072. Specifically, the another input device 5072 may include, but is not limited to, a physical keyboard, a functional key (for example, a volume control key or a switch key), a track ball, a mouse, and a joystick, which is not described herein in detail.

Furthermore, the touch panel 5071 may cover the display panel 5061. After detecting a touch operation on or near the touch panel, the touch panel 5071 transfers the touch operation to the processor 510, to determine a type of a touch event. Then, the processor 510 provides a corresponding visual output on the display panel 5061 according to the type of the touch event. In FIG. 5, the touch panel 5071 and the display panel 5061 are used as two independent parts to implement input and output functions of the terminal device. However, in some embodiments, the touch panel 5071 and the display panel 5061 may be integrated to implement the input and output functions of the terminal device, which is not specifically limited herein.

The interface unit 508 is an interface for connecting an external apparatus to the terminal device 500. For example, the external apparatus may include a wired or wireless headset port, an external power supply (or a battery charger) port, a wired or wireless data port, a storage card port, a port used to connect an apparatus having an identification module, an audio input/output (I/O) port, a video I/O port, an earphone port, and the like. The interface unit 508 may be configured to receive an input (for example, data information or power) from an external apparatus, and transmit the received input to one or more elements in the terminal device 500, or may be configured to transmit data between the terminal device 500 and the external apparatus.

The memory 509 may be configured to store a software program and various data. The memory 509 may mainly include a program storage area and a data storage area. The program storage area may store an operating system, an application program required by at least one function (for example, a sound playback function and an image display function), and the like. The data storage area may store data (for example, audio data and a phone book) created according to use of the mobile phone. In addition, the memory 509 may include a high speed random access memory, and may further include a non-volatile memory, such as at least one magnetic disk storage device, a flash memory device, or other non-volatile solid state storage devices.

The processor 510 is the control center of the terminal device, and is connected to various parts of the entire terminal device by using various interfaces and lines. The processor 510 runs or executes a software program and/or module stored in the memory 509, and invokes data stored in the memory 509, to perform various functions and data processing of the terminal device, thereby performing overall monitoring on the terminal device. Optionally, the processor 510 may include one or more processing units. Preferably, the processor 510 may integrate an application processor and a modem processor. This application processor mainly processes an operating system, a user interface, an application program, and the like. The modem processor mainly processes wireless communication. It may be understood that the modem processor may alternatively not be integrated into the processor 510.

The terminal device 500 may further include the power supply 511 (for example, a battery) for supplying power to the components. Preferably, the power supply 511 may be logically connected to the processor 510 by a power management system, thereby implementing functions such as charging, discharging, and power consumption management by using the power management system.

In addition, the terminal device 500 includes some functional modules that are not shown, which are not described herein in detail.

The embodiments of this application further provide a readable storage medium, storing a program or instruction, where the program or instruction, when being executed by a processor, implements each process of the embodiments of the method for transmitting an aperiodic positioning report applied to a terminal device or the method for transmitting an aperiodic positioning report applied to a network side device, and can achieve the same technical effect. To avoid repetition, details are not described herein again.

The processor is a processor in the terminal device described in the foregoing embodiment. The readable storage medium includes a computer-readable storage medium such as a read-only memory (Read-Only Memory, ROM for short), a random access memory (Random Access Memory, RAM for short), a magnetic disk, or an optical disc.

The embodiments of this application further provide a chip, including a processor and a communication interface, where the communication interface and the processor are coupled, and the processor is configured to run a program or instruction, to implement each process of the embodiments of the method for transmitting an aperiodic positioning report applied to a terminal device or the method for transmitting an aperiodic positioning report applied to a network side device, and can achieve the same technical effect. To avoid repetition, details are not described herein again.

It should be understood that, the chip mentioned in the embodiment of this application may also be referred to as a system-level chip, a system chip, a chip system, a system on chip, or the like.

It is to be noted that, in the specification, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by the sentence "including a/an..." does not exclude that there are still other same elements in the process, method, object, or apparatus. In addition, it is to be pointed out that, the scope of the method and apparatus in the implementations of this application is not limited to executing functions in the order shown or discussed, and may also include executing the functions in a substantially simultaneous manner or in a reverse order depending on the functions involved. For example, the described method may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by software and a necessary general hardware platform, and certainly, may alternatively be implemented by hardware, but the former manner is a preferred implementation in many cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc), and includes several instructions to enable a terminal (which may be a mobile phone, a computer, a server, an air conditioner, a network device, or the like) to perform the methods described in the embodiments of this application.

Although the embodiments of this application are described above with reference to the accompanying drawings, this application is not limited to the specific implementations described above, and the specific implementations described above are merely exemplary and not limitative. A person of ordinary skill in the art may make many forms under the teaching of this application without departing from the scope of this application and the protection scope of the claims, all of which all fall within the protection scope of this application defined by the appended claims.

## Claims

1. A method for transmitting an aperiodic positioning report, performed by a terminal device and comprising:
receiving (101) trigger signaling, the trigger signaling being used for triggering reporting of an aperiodic positioning report; and
reporting (102) one or more aperiodic positioning reports according to the trigger signaling;
**characterized in that**,
the trigger signaling comprises at least one of following:
second information, used for indicating an uplink resource used for reporting;
third information, used for indicating a time offset between the uplink resource used for reporting and the trigger signaling;
fourth information, used for indicating a type of reported positioning information;
fifth information, used for indicating a positioning manner of the reported positioning information; or
sixth information, used for indicating one or more trigger states, wherein each trigger state is associated with the one or more aperiodic positioning reports; and
before the receiving (101) trigger signaling, or before the reporting (102) one or more aperiodic positioning reports, the method further comprises:
obtaining a trigger state configuration associated with the configuration information, wherein the trigger state configuration comprises the one or more trigger states, and each trigger state is used for associating the one or more aperiodic positioning reports.

2. The method according to claim 1, wherein before reporting (102) the one or more aperiodic positioning reports or before receiving (101) the trigger signaling, the method further comprises:
obtaining configuration information of the aperiodic positioning report, the configuration information comprising at least one of following:
a positioning report identifier;
configuration information of an uplink resource;
a type of positioning information;
a positioning manner of the positioning information;
a feedback time;
service quality information; and
priority information for reporting the positioning information;
wherein the configuration information of the uplink resource comprises time domain configuration information of the uplink resource and/or frequency domain configuration information of the uplink resource, wherein
the time domain configuration information comprises at least one of following:
a time offset between the uplink resource and the trigger signaling;
a number of symbols and symbol positions being occupied by the uplink resource in a time slot;
a period of the uplink resource;
a time interval of the uplink resource; and
a number of uplink resources.

3. The method according to claim 1, wherein the aperiodic positioning report comprises at least one of following:
a positioning report identifier;
positioning information;
a reason for failure of reporting the positioning information;
a positioning manner corresponding to the positioning information;
a reporting indication of remaining positioning information; and
a confirmation request;
wherein positioning information in the aperiodic positioning report comprises a measurement result of a positioning reference signal;
the positioning reference signal comprises: a periodic positioning reference signal, aperiodic positioning reference signal, or semi-persistent positioning reference signal, and/or other reference signals for positioning.

4. The method according to claim 3, wherein before reporting (102) the one or more aperiodic positioning reports, the method further comprises:
obtaining indication information of the positioning reference signal, the indication information comprising at least one of following:
a positioning reference signal resource set identifier;
a positioning reference signal resource identifier;
a sending and transmission point identifier; and
a positioning frequency layer identifier.

5. The method according to claim 3, wherein the measurement result of the positioning reference signal is a measurement result of the positioning reference signal not later than a reference time; wherein the reference time is a moment when the terminal device receives the trigger signaling, or the reference time is a moment corresponding to a preset downlink resource before an uplink resource used for reporting the measurement result.

6. The method according to claim 1, wherein a first uplink symbol of an uplink resource used by the one or more aperiodic positioning reports is later than a first uplink symbol after a target moment, wherein
the target moment is a moment after an end moment of the trigger signaling and away from the end moment of the trigger signaling with an interval of a first duration; or the target moment is a moment after an end moment of a last symbol occupied by a latest resource in measurement resources and away from the end moment of the last symbol with an interval of a second duration.

7. The method according to claim 1, wherein in a case that the triggering signaling triggers a plurality of positioning reports, a maximum time offset configured by each positioning report is adopted as a time offset between an uplink resource used for reporting each aperiodic positioning report and the triggering signaling.

8. The method according to claim 1, wherein in a case that a positioning manner of the one or more aperiodic positioning reports is multi-round trip time multi-RTT positioning, the trigger signaling is further used for triggering sending of an aperiodic uplink positioning reference signal;
wherein the trigger signaling comprises: seventh information, used for indicating the sending of the aperiodic uplink positioning reference signal; positioning information in the aperiodic positioning report is associated with a sending moment of the aperiodic uplink positioning reference signal.

9. The method according to claim 1, wherein before receiving (101) the trigger signaling or before reporting (102) the one or more aperiodic positioning reports, the method further comprises:
reporting capability information, the capability information indicating whether the terminal device supports the reporting of the aperiodic positioning report.

10. The method according to claim 1, wherein reporting (101) the one or more aperiodic positioning reports according to the trigger signaling comprises:
preferentially reporting positioning information with a high priority in the one or more aperiodic positioning reports.

11. A method for transmitting an aperiodic positioning report, performed by a network side device and comprising:
sending (201) trigger signaling, the trigger signaling being used for triggering reporting of an aperiodic positioning report; and
receiving (202) one or more aperiodic positioning reports reported by a terminal device according to the trigger signaling;
**characterized in that**,
the trigger signaling comprises at least one of following:
second information, used for indicating an uplink resource used for reporting;
third information, used for indicating a time offset between the uplink resource used for reporting and the trigger signaling;
fourth information, used for indicating a type of reported positioning information;
fifth information, used for indicating a positioning manner of the reported positioning information; or
sixth information, used for indicating one or more trigger states, wherein each trigger state is associated with the one or more aperiodic positioning reports; and
before the sending (201) trigger signaling, or before the receiving (202) one or more aperiodic positioning reports, the method further comprises:
sending a trigger state configuration associated with the configuration information, wherein the trigger state configuration comprises the one or more trigger states, and each trigger state is used for associating the one or more aperiodic positioning reports.

12. The method according to claim 11, wherein before sending (201) the trigger signaling, the method further comprises:
sending configuration information of the aperiodic positioning report, the configuration information comprising at least one of following:
a positioning report identifier;
configuration information of an uplink resource;
a type of positioning information;
a positioning manner of the positioning information;
a feedback time;
service quality information; or
priority information for reporting the positioning information;
wherein the configuration information of the uplink resource comprises time domain configuration information of the uplink resource and/or frequency domain configuration information of the uplink resource, wherein
the time domain configuration information comprises at least one of following:
a time offset between the uplink resource and the trigger signaling;
a number of symbols and symbol positions being occupied by the uplink resource in a time slot;
a period of the uplink resource;
a time interval of the uplink resource; or
a number of uplink resources.

13. The method according to claim 11, wherein the aperiodic positioning report comprises at least one of following:
a positioning report identifier;
positioning information;
a reason for failure of reporting the positioning information;
a positioning manner corresponding to the positioning information;
a reporting indication of remaining positioning information; or
a confirmation request;
wherein positioning information in the aperiodic positioning report comprises a measurement result of a positioning reference signal;
the positioning reference signal comprises: a periodic positioning reference signal, aperiodic positioning reference signal, or semi-persistent positioning reference signal, and/or other reference signals for positioning.

14. A terminal device (500), comprising a processor (510), a memory (509), and a program or instruction stored on the memory (509) and executable on the processor (510), wherein the program or instruction, when being executed by the processor (510), implements steps of the method for transmitting an aperiodic positioning report according to any one of claims 1 to 10.

15. A network side device, comprising a processor, a memory, and a program or instruction stored on the memory and executable on the processor, wherein the program or instruction, when being executed by the processor, implements steps of the method for transmitting an aperiodic positioning report according to claim 11.

## Patentansprüche

1. Verfahren zur Übertragung eines aperiodischen Positionierungsberichtes, das von einem Endgerät durchgeführt wird, und umfassend:
Empfangen (101) von Auslösesignalisierung, wobei die Auslösesignalisierung zum Auslösen von Berichten eines aperiodischen Positionierungsberichtes benutzt wird; und
Berichten (102) eines oder mehrerer aperiodischen Positionierungsberichte gemäß der Auslösesignalisierung;
**dadurch gekennzeichnet, dass**
die Auslösesignalisierung zumindest eines von den folgenden umfasst:
zweite Informationen, die benutzt werden, um eine Uplink-Ressource anzugeben, die für das Berichten benutzt wird;
dritte Informationen, die benutzt werden, um einen Zeitversatz zwischen der Uplink-Ressource, die für das Berichten benutzt wird, und der Auslösesignalisierung anzugeben;
vierte Informationen, die benutzt werden, um einen Typ von berichteten Positionierungsinformationen anzugeben;
fünfte Informationen, die benutzt werden, um eine Positionierungsweise der berichteten Positionierungsinformationen anzugeben; oder
sechste Informationen, die benutzt werden, um einen oder mehrere Auslösezustände anzugeben, worin jeder Auslösezustand dem einen oder den mehreren aperiodischen Positionierungsberichten zugeordnet ist; und
vor dem Empfangen (101) von Auslösesignalisierung, oder vor dem Berichten (102) eines oder mehrerer aperiodischen Positionierungsberichte, das Verfahren ferner umfasst:
Erhalten einer Auslösezustandskonfiguration, die den Konfigurationsinformationen zugeordnet ist, worin die Auslösezustandskonfiguration den einen oder die mehreren Auslösezustände umfasst, und jeder Auslösezustand benutzt wird, um den einen oder die mehreren aperiodischen Positionierungsberichte zuzuordnen.

2. Verfahren nach Anspruch 1, worin vor dem Berichten (102) des einen oder der mehreren aperiodischen Positionierungsberichte oder vor dem Empfangen (101) der Auslösesignalisierung, das Verfahren ferner umfasst:
Erhalten von Konfigurationsinformationen des aperiodischen Positionierungsberichtes, wobei die Konfigurationsinformationen zumindest eines von den folgenden umfassen:
eine Positionierungsberichtskennung;
Konfigurationsinformationen einer Uplink-Ressource;
einen Typ von Positionierungsinformationen;
eine Positionierungsweise der Positionierungsinformationen;
eine Rückkopplungszeit;
Dienstqualitätsinformationen; und
Prioritätsinformationen zum Berichten der Positionierungsinformationen;
worin die Konfigurationsinformationen der Uplink-Ressource Zeitdomänenkonfigurationsinformationen der Uplink-Ressource und/oder Frequenzdomänenkonfigurationsinformationen der Uplink-Ressource umfassen, worin
die Zeitdomänenkonfigurationsinformationen zumindest eines von den folgenden umfassen:
einen Zeitversatz zwischen der Uplink-Ressource und der Auslösesignalisierung;
eine Anzahl von Symbolen und Symbolpositionen, die von der Uplink-Ressource in einem Zeitschlitz besetzt werden;
einen Zeitraum der Uplink-Ressource;
ein Zeitintervall der Uplink-Ressource; und
eine Anzahl von Uplink-Ressourcen.

3. Verfahren nach Anspruch 1, worin der aperiodische Positionierungsbericht zumindest eines von den folgenden umfasst:
eine Positionierungsberichtskennung;
Positionierungsinformationen;
einen Grund für das Nicht-Berichten der Positionierungsinformationen;
eine Positionierungsweise, die den Positionierungsinformationen entspricht;
eine Berichtsangabe von verbleibenden Positionierungsinformationen; und
eine Bestätigungsaufforderung;
worin Positionierungsinformationen in dem aperiodischen Positionierungsbericht ein Messungsergebnis eines Positionierungsreferenzsignals umfassen;
das Positionierungsreferenzsignal umfasst: ein periodisches Positionierungsreferenzsignal, ein aperiodisches Positionierungsreferenzsignal oder ein semi-persistentes Positionierungsreferenzsignal, und/oder andere Referenzsignale für das Positionieren.

4. Verfahren nach Anspruch 3, worin vor dem Berichten (102) des einen oder der mehreren aperiodischen Positionierungsberichte, das Verfahren ferner umfasst:
Erhalten von Angabeinformationen des Positionierungsreferenzsignals, wobei die Angabeinformationen zumindest eine von den folgenden umfassen:
eine Positionierungsreferenzsignal-Ressourcensatzkennung;
eine Positionierungsreferenzsignal-Ressourcenkennung;
eine Sende- und Übertragungspunktkennung; und
eine Positionierungsfrequenzschichtkennung.

5. Verfahren nach Anspruch 3, worin das Messungsergebnis des Positionierungsreferenzsignals ein Messungsergebnis des Positionierungsreferenzsignals ist, das nicht später als eine Referenzzeit ist; worin die Referenzzeit ein Moment ist, wenn das Endgerät die Auslösesignalisierung empfängt, oder die Referenzzeit ein Moment ist, der einer vorgegebenen Downlink-Ressource vor einer Uplink-Ressource, die zum Berichten des Messungsergebnisses benutzt wird, entspricht.

6. Verfahren nach Anspruch 1, worin ein erstes Uplink-Symbol einer Uplink-Ressource, die von dem einen oder den mehreren aperiodischen Positionierungsberichten benutzt wird, später ist als ein erstes Uplink-Symbol nach einem Zielmoment, worin
der Zielmoment ein Moment nach einem Endmoment der Auslösesignalisierung und weg vom Endmoment der Auslösesignalisierung mit einem Intervall einer ersten Dauer ist; oder der Zielmoment ein Moment nach einem Endmoment eines letzten Symbols, das von einer neuesten Ressource in Messungsressourcen besetzt ist, und weg vom Endmoment des letzten Symbols mit einem Intervall einer zweiten Dauer ist.

7. Verfahren nach Anspruch 1, worin in einem Falle, dass die Auslösesignalisierung eine Vielzahl von Positionierungsberichten auslöst, ein höchster Zeitversatz, der von jedem Positionierungsbericht konfiguriert ist, als ein Zeitversatz zwischen einer Uplink-Ressource, die für das Berichten jedes aperiodischen Positionierungsberichtes benutzt wird, und der Auslösesignalisierung angewendet wird.

8. Verfahren nach Anspruch 1, worin in einem Falle, dass eine Positionierungsweise des einen oder der mehreren aperiodischen Positionierungsberichte Mehr-Umlaufzeit Mehr-RTT-Positionierung ist, die Auslösesignalisierung ferner für das Auslösen des Sendens eines aperiodischen Uplink-Positionierungs-Referenzsignals benutzt wird;
worin die Auslösesignalisierung umfasst: siebte Informationen, die benutzt werden, um das Senden des aperiodischen Uplink-Positionierungs-Referenzsignals anzugeben; Positionierungsinformationen in dem aperiodischen Positionierungsbericht einem Sendemoment des aperiodischen Uplink-Positionierungs-Referenzsignals zugeordnet sind.

9. Verfahren nach Anspruch 1, worin vor dem Empfangen (101) der Auslösesignalisierung oder vor dem Berichten (102) des einen oder der mehreren aperiodischen Positionierungsberichte, das Verfahren ferner umfasst:
Berichten von Fähigkeitsinformationen, wobei die Fähigkeitsinformationen angeben, ob das Endgerät das Berichten des aperiodischen Positionierungsberichtes unterstützt.

10. Verfahren nach Anspruch 1, worin das Berichten (101) des einen oder der mehreren aperiodischen Positionierungsberichte gemäß der Auslösesignalisierung umfasst:
vorzugsweise Berichten von Positionierungsinformationen mit einer hohen Priorität in dem einen oder den mehreren aperiodischen Positionierungsberichten.

11. Verfahren zur Übertragung eines aperiodischen Positionierungsberichtes, das von einer netzwerkseitigen Vorrichtung durchgeführt wird, und umfassend:
Senden (201) von Auslösesignalisierung, wobei die Auslösesignalisierung zum Auslösen von Berichten eines aperiodischen Positionierungsberichtes benutzt wird; und
Empfangen (202) eines oder mehrerer aperiodischen Positionierungsberichte, die von einem Endgerät gemäß der Auslösesignalisierung berichtet werden;
**dadurch gekennzeichnet, dass**
die Auslösesignalisierung zumindest eines von den folgenden umfasst:
zweite Informationen, die benutzt werden, um eine Uplink-Ressource anzugeben, die für das Berichten benutzt wird;
dritte Informationen, die benutzt werden, um einen Zeitversatz zwischen der Uplink-Ressource, die für das Berichten benutzt wird, und der Auslösesignalisierung anzugeben;
vierte Informationen, die benutzt werden, um einen Typ von berichteten Positionierungsinformationen anzugeben;
fünfte Informationen, die benutzt werden, um eine Positionierungsweise der berichteten Positionierungsinformationen anzugeben; oder
sechste Informationen, die benutzt werden, um einen oder mehrere Auslösezustände anzugeben, worin jeder Auslösezustand dem einen oder den mehreren aperiodischen Positionierungsberichten zugeordnet ist; und
vor dem Senden (201) von Auslösesignalisierung, oder vor dem Empfangen (202) eines oder mehrerer aperiodischen Positionierungsberichte, das Verfahren ferner umfasst:
Senden einer Auslösezustandskonfiguration, die den Konfigurationsinformationen zugeordnet ist, worin die Auslösezustandskonfiguration den einen oder die mehreren Auslösezustände umfasst, und jeder Auslösezustand benutzt wird, um die einen oder die mehreren aperiodischen Positionierungsberichte zuzuordnen.

12. Verfahren nach Anspruch 11, worin vor dem Senden (201) der Auslösesignalisierung, das Verfahren ferner umfasst:
Senden von Konfigurationsinformationen des aperiodischen Positionierungsberichtes, wobei die Konfigurationsinformationen zumindest eines von den folgenden umfassen:
eine Positionierungsberichtskennung;
Konfigurationsinformationen einer Uplink-Ressource;
einen Typ von Positionierungsinformationen;
eine Positionierungsweise der Positionierungsinformationen;
eine Rückkopplungszeit;
Dienstqualitätsinformationen; oder
Prioritätsinformationen zum Berichten der Positionierungsinformationen;
worin die Konfigurationsinformationen der Uplink-Ressource Zeitdomänenkonfigurationsinformationen der Uplink-Ressource und/oder Frequenzdomänenkonfigurationsinformationen der Uplink-Ressource umfassen, worin
die Zeitdomänenkonfigurationsinformationen zumindest eines von den folgenden umfassen:
einen Zeitversatz zwischen der Uplink-Ressource und der Auslösesignalisierung;
eine Anzahl von Symbolen und Symbolpositionen, die von der Uplink-Ressource in einem Zeitschlitz besetzt werden;
einen Zeitraum der Uplink-Ressource;
ein Zeitintervall der Uplink-Ressource; oder
eine Anzahl von Uplink-Ressourcen.

13. Verfahren nach Anspruch 11, worin der aperiodische Positionierungsbericht zumindest eines von den folgenden umfasst:
eine Positionierungsberichtskennung;
Positionierungsinformationen;
einen Grund für das Nicht-Berichten der Positionierungsinformationen;
eine Positionierungsweise, die den Positionierungsinformationen entspricht;
eine Berichtsangabe von verbleibenden Positionierungsinformationen; oder
eine Bestätigungsaufforderung;
worin Positionierungsinformationen in dem aperiodischen Positionierungsbericht ein Messungsergebnis eines Positionierungsreferenzsignals umfassen;
das Positionierungsreferenzsignal umfasst: ein periodisches Positionierungsreferenzsignal, ein aperiodisches Positionierungsreferenzsignal oder ein semi-persistentes Positionierungsreferenzsignal, und/oder andere Referenzsignale für das Positionieren.

14. Endgerät (500), umfassend einen Prozessor (510), einen Speicher (509) und ein Programm oder eine Anweisung, das bzw. die am Speicher (509) gespeichert ist und am Prozessor (510) ausführbar ist, worin das Programm oder die Anweisung, wenn es bzw. sie vom Prozessor (510) ausgeführt wird, Schritte des Verfahrens zur Übertragung eines aperiodischen Positionierungsberichtes nach einem der Ansprüche 1 bis 10 implementiert.

15. Netzwerkseitige Vorrichtung, umfassend einen Prozessor, einen Speicher und ein Programm oder eine Anweisung, das bzw. die am Speicher gespeichert ist und am Prozessor ausführbar ist, worin das Programm oder die Anweisung, wenn es bzw. sie vom Prozessor ausgeführt wird, Schritte des Verfahrens zur Übertragung eines aperiodischen Positionierungsberichtes nach Anspruch 11 implementiert.

## Revendications

1. Procédé de transmission d'un rapport de positionnement apériodique, mis en œuvre par un dispositif terminal et comprenant :
la réception (101) d'une signalisation de déclenchement, la signalisation de déclenchement étant utilisée pour déclencher la remontée d'un rapport de positionnement apériodique ; et
la remontée (102) d'un ou plusieurs rapports de positionnement apériodiques selon la signalisation de déclenchement ;
**caractérisé en ce que**,
la signalisation de déclenchement comprend au moins l'un des éléments suivants :
une deuxième information, utilisée pour indiquer une ressource de liaison montante utilisée pour la remontée ;
une troisième information, utilisée pour indiquer un décalage temporel entre la ressource de liaison montante utilisée pour la remontée et la signalisation de déclenchement ;
une quatrième information, utilisée pour indiquer un type d'informations de positionnement remontées ;
une cinquième information, utilisée pour indiquer un mode de positionnement des informations de positionnement remontées ; ou
une sixième information, utilisée pour indiquer un ou plusieurs états de déclenchement, dans laquelle chaque état de déclenchement est associé au ou aux rapports de positionnement apériodiques ; et
avant la réception (101) de la signalisation de déclenchement, ou avant la remontée (102) d'un ou plusieurs rapports de positionnement apériodiques, le procédé comprend en outre :
l'obtention d'une configuration d'état de déclenchement associée aux informations de configuration, dans lequel la configuration d'état de déclenchement comprend le ou les états de déclenchement, et chaque état de déclenchement est utilisé pour associer le ou les rapports de positionnement apériodiques.

2. Procédé selon la revendication 1, dans lequel, avant la remontée (102) du ou des rapports de positionnement apériodiques ou avant la réception (101) de la signalisation de déclenchement, le procédé comprend en outre :
l'obtention d'informations de configuration du rapport de positionnement apériodique, les informations de configuration comprenant au moins l'un des éléments suivants :
un identifiant de rapport de positionnement ;
des informations de configuration d'une ressource de liaison montante ;
un type d'informations de positionnement ;
un mode de positionnement des informations de positionnement ;
un délai de rétroaction ;
des informations de qualité de service ; et
des informations de priorité pour la remontée des informations de positionnement ;
dans lequel les informations de configuration de la ressource de liaison montante comprennent des informations de configuration dans le domaine temporel de la ressource de liaison montante et/ou des informations de configuration dans le domaine fréquentiel de la ressource de liaison montante, dans lequel
les informations de configuration dans le domaine temporel comprennent au moins l'un des éléments suivants :
un décalage temporel entre la ressource de liaison montante et la signalisation de déclenchement ;
un nombre de symboles et des positions de symboles occupés par la ressource de liaison montante dans un créneau temporel ;
une période de la ressource de liaison montante ;
un intervalle de temps de la ressource de liaison montante ; et
un nombre de ressources de liaison montante.

3. Procédé selon la revendication 1, dans lequel le rapport de positionnement apériodique comprend au moins l'un des éléments suivants :
un identifiant de rapport de positionnement ;
des informations de positionnement ;
une raison d'échec de la remontée des informations de positionnement ;
un mode de positionnement correspondant aux informations de positionnement ;
une indication de remontée d'informations de positionnement restantes ; et
une demande de confirmation ;
dans lequel les informations de positionnement dans le rapport de positionnement apériodique comprennent un résultat de mesure d'un signal de référence de positionnement ;
le signal de référence de positionnement comprend : un signal de référence de positionnement périodique, un signal de référence de positionnement apériodique ou un signal de référence de positionnement semi-persistant, et/ou d'autres signaux de référence pour le positionnement.

4. Procédé selon la revendication 3, dans lequel, avant la remontée (102) du ou des rapports de positionnement apériodiques, le procédé comprend en outre :
l'obtention d'informations d'indication du signal de référence de positionnement, les informations d'indication comprenant au moins l'un des éléments suivants :
un identifiant d'ensemble de ressources de signal de référence de positionnement ;
un identifiant de ressource de signal de référence de positionnement ;
un identifiant de point d'envoi et de transmission ; et
un identifiant de couche de fréquence de positionnement.

5. Procédé selon la revendication 3, dans lequel le résultat de mesure du signal de référence de positionnement est un résultat de mesure du signal de référence de positionnement non postérieur à un instant de référence ; dans lequel l'instant de référence est un moment où le dispositif terminal reçoit la signalisation de déclenchement, ou l'instant de référence est un moment correspondant à une ressource de liaison descendante prédéfinie avant une ressource de liaison montante utilisée pour la remontée du résultat de mesure.

6. Procédé selon la revendication 1, dans lequel un premier symbole de liaison montante d'une ressource de liaison montante utilisée par le ou les rapports de positionnement apériodiques est postérieur à un premier symbole de liaison montante après un moment cible, dans lequel
le moment cible est un moment postérieur à un moment de fin de la signalisation de déclenchement et éloigné du moment de fin de la signalisation de déclenchement d'un intervalle d'une première durée ; ou le moment cible est un moment postérieur à un moment de fin d'un dernier symbole occupé par une ressource la plus tardive parmi des ressources de mesure et éloigné du moment de fin du dernier symbole d'un intervalle d'une deuxième durée.

7. Procédé selon la revendication 1, dans lequel, dans le cas où la signalisation déclenchante déclenche une pluralité de rapports de positionnement, un décalage temporel maximal configuré par chaque rapport de positionnement est adopté en tant que décalage temporel entre une ressource de liaison montante utilisée pour la remontée de chaque rapport de positionnement apériodique et la signalisation déclenchante.

8. Procédé selon la revendication 1, dans lequel, dans le cas où un mode de positionnement du ou des rapports de positionnement apériodiques est un positionnement à temps aller-retour multiples multi-RTT, la signalisation de déclenchement est en outre utilisée pour déclencher l'envoi d'un signal de référence de positionnement apériodique de liaison montante ;
dans lequel la signalisation de déclenchement comprend : une septième information, utilisée pour indiquer l'envoi du signal de référence de positionnement apériodique de liaison montante ; les informations de positionnement dans le rapport de positionnement apériodique sont associées à un moment d'envoi du signal de référence de positionnement apériodique de liaison montante.

9. Procédé selon la revendication 1, dans lequel, avant la réception (101) de la signalisation de déclenchement ou avant la remontée (102) du ou des rapports de positionnement apériodiques, le procédé comprend en outre :
la remontée d'informations de capacité, les informations de capacité indiquant si le dispositif terminal prend en charge la remontée du rapport de positionnement apériodique.

10. Procédé selon la revendication 1, dans lequel la remontée (101) du ou des rapports de positionnement apériodiques selon la signalisation de déclenchement comprend :
la remontée préférentielle d'informations de positionnement ayant une priorité élevée dans le ou les rapports de positionnement apériodiques.

11. Procédé de transmission d'un rapport de positionnement apériodique, mis en œuvre par un dispositif côté réseau et comprenant :
l'envoi (201) d'une signalisation de déclenchement, la signalisation de déclenchement étant utilisée pour déclencher la remontée d'un rapport de positionnement apériodique ; et
la réception (202) d'un ou plusieurs rapports de positionnement apériodiques remontés par un dispositif terminal selon la signalisation de déclenchement ;
**caractérisé en ce que**,
la signalisation de déclenchement comprend au moins l'un des éléments suivants :
une deuxième information, utilisée pour indiquer une ressource de liaison montante utilisée pour la remontée ;
une troisième information, utilisée pour indiquer un décalage temporel entre la ressource de liaison montante utilisée pour la remontée et la signalisation de déclenchement ;
une quatrième information, utilisée pour indiquer un type d'informations de positionnement remontées ;
une cinquième information, utilisée pour indiquer un mode de positionnement des informations de positionnement remontées ; ou
une sixième information, utilisée pour indiquer un ou plusieurs états de déclenchement, dans laquelle chaque état de déclenchement est associé au ou aux rapports de positionnement apériodiques ; et
avant l'envoi (201) de la signalisation de déclenchement, ou avant la réception (202) d'un ou plusieurs rapports de positionnement apériodiques, le procédé comprend en outre :
l'envoi d'une configuration d'état de déclenchement associée aux informations de configuration, dans lequel la configuration d'état de déclenchement comprend le ou les états de déclenchement, et chaque état de déclenchement est utilisé pour associer le ou les rapports de positionnement apériodiques.

12. Procédé selon la revendication 11, dans lequel, avant l'envoi (201) de la signalisation de déclenchement, le procédé comprend en outre :
l'envoi d'informations de configuration du rapport de positionnement apériodique, les informations de configuration comprenant au moins l'un des éléments suivants :
un identifiant de rapport de positionnement ;
des informations de configuration d'une ressource de liaison montante ;
un type d'informations de positionnement ;
un mode de positionnement des informations de positionnement ;
un délai de rétroaction ;
des informations de qualité de service ; ou
des informations de priorité pour la remontée des informations de positionnement ;
dans lequel les informations de configuration de la ressource de liaison montante comprennent des informations de configuration dans le domaine temporel de la ressource de liaison montante et/ou des informations de configuration dans le domaine fréquentiel de la ressource de liaison montante, dans lequel
les informations de configuration dans le domaine temporel comprennent au moins l'un des éléments suivants :
un décalage temporel entre la ressource de liaison montante et la signalisation de déclenchement ;
un nombre de symboles et des positions de symboles occupés par la ressource de liaison montante dans un créneau temporel ;
une période de la ressource de liaison montante ;
un intervalle de temps de la ressource de liaison montante ; ou
un nombre de ressources de liaison montante.

13. Procédé selon la revendication 11, dans lequel le rapport de positionnement apériodique comprend au moins l'un des éléments suivants :
un identifiant de rapport de positionnement ;
des informations de positionnement ;
une raison d'échec de la remontée des informations de positionnement ;
un mode de positionnement correspondant aux informations de positionnement ;
une indication de remontée d'informations de positionnement restantes ; ou
une demande de confirmation ;
dans lequel les informations de positionnement dans le rapport de positionnement apériodique comprennent un résultat de mesure d'un signal de référence de positionnement ;
le signal de référence de positionnement comprend : un signal de référence de positionnement périodique, un signal de référence de positionnement apériodique ou un signal de référence de positionnement semi-persistant, et/ou d'autres signaux de référence pour le positionnement.

14. Dispositif terminal (500), comprenant un processeur (510), une mémoire (509), et un programme ou une instruction stockés dans la mémoire (509) et exécutables sur le processeur (510), dans lequel le programme ou l'instruction, lorsqu'ils sont exécutés par le processeur (510), mettent en œuvre des étapes du procédé de transmission d'un rapport de positionnement apériodique selon l'une quelconque des revendications 1 à 10.

15. Dispositif côté réseau, comprenant un processeur, une mémoire, et un programme ou une instruction stockés dans la mémoire et exécutables sur le processeur, dans lequel le programme ou l'instruction, lorsqu'ils sont exécutés par le processeur, mettent en œuvre des étapes du procédé de transmission d'un rapport de positionnement apériodique selon la revendication 11.
